# EUROPEAN PATENT SPECIFICATION

(11) **EP 3 313 109 B1**
(45) Date of publication and mention of the grant of the patent: **15.07.2020**
(21) Application number: 16811664.8
(22) Date of filing: 15.06.2016
(51) Int. Cl.: H04W 12/04, H04W 84/12, H04L 12/28, H04W 12/00, H04W 84/18, H04W 88/04, H04W 88/06

(54) **CONNECTION METHOD FOR COMMUNICATION DEVICE, COMMUNICATION DEVICE, AND CONTROL TERMINAL DEVICE**
VERBINDUNGSVERFAHREN FÜR KOMMUNIKATIONSVORRICHTUNG, KOMMUNIKATIONSVORRICHTUNG UND STEUERTERMINALVORRICHTUNG
PROCÉDÉ DE CONNEXION POUR DISPOSITIF DE COMMUNICATION, DISPOSITIF DE COMMUNICATION ET DISPOSITIF TERMINAL DE COMMANDE

(30) Priority: 16.06.2015 JP 2015121466; 06.08.2015 JP 2015156004
(43) Date of publication of application: 25.04.2018
(73) Proprietor: Yamaha Corporation, Hamamatsu-shi, Shizuoka 430-8650 (JP)
(72) Inventor: SUYAMA Akihiko, Hamamatsu-shi Shizuoka 430-8650 (JP); SHIRAI Masakazu, Hamamatsu-shi Shizuoka 430-8650 (JP); SUEMITSU Yuki, Hamamatsu-shi Shizuoka 430-8650 (JP)
(74) Representative: Hoffmann Eitle
(86) International application number: PCT/JP2016/067837
(87) International publication number: WO 2016/204190

(56) References cited:
- JP-A- 2010 028 171
- JP-A- 2015 154 130
- US-A1- 2012 044 354
- US-A1- 2014 028 818
- US-A1- 2014 192 792
- US-A1- 2015 026 779
- US-B1- 9 054 961
- YOSHIKO NEMOTO: 'Mo Matenai!? DVD Recorder & Usugata TV' NIKKEI ZERO-ONE vol. 96, 22 April 2004, pages 63 - 73, XP009507898
- Ieee: "IEEE Standard for Information Technology-Telecommunications and information exchange between systems-Local and metropolitan area networks-Specific requirements Part 11: Wireless LAN Medium Access Control (MAC) and Physical Layer (PHY) Specifications", , 8 March 2007 (2007-03-08), XP055530268, Retrieved from the Internet: URL:https://ieeexplore.ieee.org/stampPDF/g etPDF.jsp?tp=&arnumber=4248378 [retrieved on 2018-12-05]

## Description

### Technical Field

The present disclosure relates to an audio system in which connection can be established through a network. Particularly, it relates to a method for connecting audio devices (communication devices) to the network efficiently.

### Background Art

In an audio system including audio devices, the audio devices are heretofore connected to one another by analog or digital audio cables. Recently, it is considered that the devices are connected to one another through a network (particularly a wireless network) and audio signals or command messages are transmitted/received among the devices by packets in order to eliminate such a troublesome cable group and increase the degree of freedom for any connection form.

### Citation List

### Patent Literature

Patent Literature 1: JP-A-2003-101546
US 9,054,961 relates to the setup of multiple devices on a local area network.
US 2015/0026779 relates to performing remote Wi-Fi network configuration when a network security protocol is unknown.

### Summary of Invention

### Technical Problem

An audio cable is required for any input/output. When the audio cable is physically connected to a terminal of a device, connection is completed. On the other hand, for example, as described in Patent Literature 1, a wireless network requires setting of an SSID, a password, etc. and work for the setting is more complicated than connection of the cable.

Therefore, an object of the disclosure is to make connection of a communication device to a network easy.

### Solution to Problem

In view of the above object, the invention proposes a method according to claim 1.
(1) A connection method for a communication device according to the present disclosure is a connection method for establishing connection between the communication device and a control terminal device through a network, the control terminal device controlling the communication device, the connection method including:
   a step of activating the communication device by itself as a stand-alone access point to which the control terminal device can be connected;
   a step of cancelling connection of the control terminal device to the network and then establishing connection of the control terminal device to the access point;
   a step of transmitting network information to the communication device from the control terminal device, the network information being information for establishing connection to the network;
   a step of receiving the network information by the communication device;
   a step of stopping the stand-alone access point by the communication device;
   a step of establishing connection of the communication device to the network using the received network information;
   a step of restoring the connection of the control terminal device to the network;
   a step of accessing the communication device to the control terminal device through the network; and
   a step of activating the communication device by itself as an access point through which another communication device can be connected to the network.
(2) The communication device which can be controlled through a network, including:
   a wireless communication portion; and
   a control portion,
   wherein the control portion is configured to:
      activate the wireless communication portion as a stand-alone access point;
      acquire network information from a device which has established connection to the access point, the network information being information for establishing connection to the network;
      stop the access point and connect the wireless communication portion to the network using the network information; and
      after the wireless communication portion is connected to the network, allow the wireless communication portion to function as an access point for relaying another device to the network.
(3) A control terminal device according to the disclosure is a control terminal device including:
   a wireless communication portion; and
   a control portion,
   wherein the control portion is configured to:
      establish connection to a network using the wireless communication portion in a normal time;
      when finding an access point which has been activated under a specific condition, cut the connection to the network and establish connection to the access point;
      transmit network information to the access point;
      after transmitting the network information, cut the connection to the access point and establish connection to the network again;
      receive a message from a communication device activated as the access point through the network; and
      register the communication device.

### Advantageous Effects of Invention

According to the disclosure, it is possible to make connection of a communication device to a network easy.

### Brief Description of Drawings

[Fig. 1] Fig. 1 is a view of the configuration of an audio system to which the disclosure is applied.
[Fig. 2] Fig. 2 is a block diagram of a portable phone to which the disclosure is applied and which functions as a controller.
[Fig. 3] Fig. 3 is a block diagram of an audio device to which the disclosure is applied.
[Figs. 4] Figs. 4(A) and 4(B) are views illustrating examples of operation guide screens displayed on the controller.
[Fig. 5] Fig. 5 is a view illustrating a procedure for establishing communication between the controller and the audio device.
[Fig. 6] Fig. 6 is a view illustrating a procedure for establishing communication among the controller, the audio device and another audio device.
[Fig. 7] Fig. 7 is a flow chart illustrating operation of the controller.
[Fig. 8] Fig. 8 is a flow chart illustrating operation of each of the audio devices.
[Fig. 9] Fig. 9 is a view illustrating an example of an audio system table set in the controller.
[Fig. 10] Fig. 10 is a flow chart illustrating operation of the controller.
[Figs. 11] Figs. 11(A) and 11(B) are views illustrating examples of room selection screens displayed for the audio device.

### Description of Embodiment

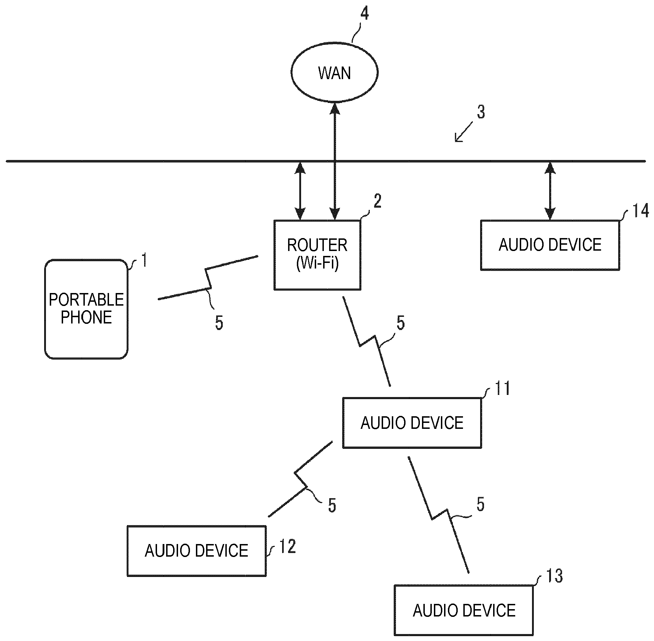

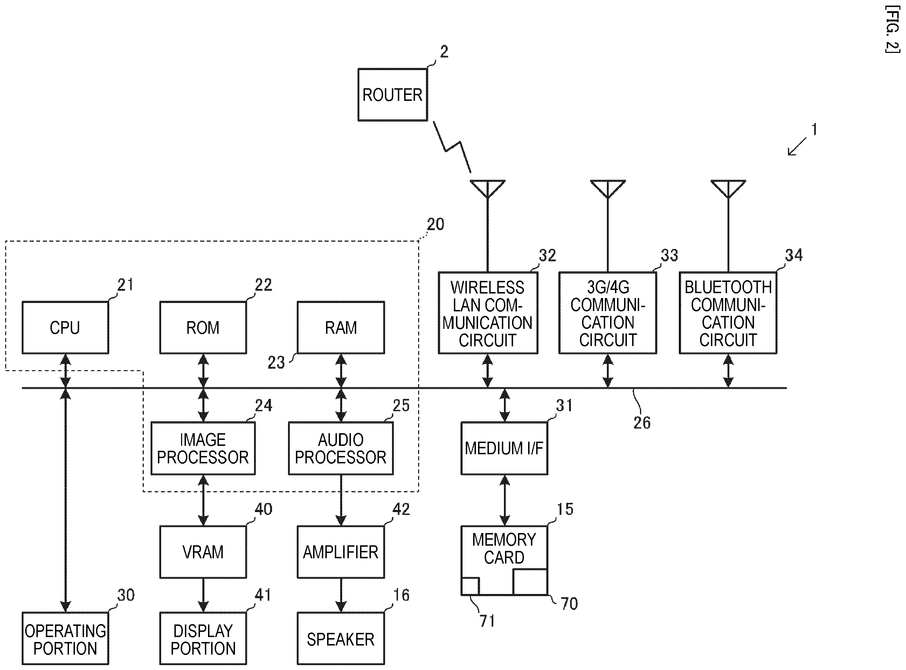

Fig. 1 is a view illustrating the configuration of an audio system to which the present disclosure is applied. The audio system includes a portable phone (controller) 1 and audio devices 11 to 14 which are connected to one another through a network 3 including a router 2 (Wi-Fi router). The network 3 includes a wired LAN and a wireless LAN. When an audio system control program 70 (see Fig. 2) is activated, the portable phone 1 functions as an audio system controller (hereinafter referred to as controller) 1. The audio devices 11 to 13 are connected to the network 3 by the wireless LAN. The audio device 14 is connected to the network 3 by the wired LAN. For example, Ethernet (registered trademark) (IEEE 802.3) is used for the wired LAN 3, and Wi-Fi (IEEE 802.11g) is used for the wireless LAN 5.

Incidentally, each of the audio devices 11 to 14 can be connected to both the wireless LAN and the wired LAN. When the audio device 11 to 14 has been connected to the network 3, the audio device 11 to 14 also functions as an access point for accepting wireless LAN connection from another audio device and connecting the other audio device to the network 3. That is, each of the audio devices 11 to 14 is mounted with two high frequency communication portions (RF modules) which perform wireless LAN communication. In addition, each of the audio devices 11 to 14 may be mounted with one high frequency communication portion which performs two wireless LAN communications in a time division manner.

In Fig. 1, the audio device 11 is directly connected to the router 2 by the wireless LAN. The audio device 12 and the audio device 13 are connected to the router 2 through the audio device 11 which is an access point (system access point). In addition, the audio device 14 is connected to the router 2 via the wired LAN. Incidentally, the audio device 14 also functions as an access point (system access point). Each of the audio devices is also used as an access point. The system access point 11 to 14 materialized by the audio device operates in a stealth mode normally (except at the time of initial connection which will be described later) so that presence of the system access point 11 to 14 can be prevented from being known by any other device easily. An access point of the network 3 and the system access points may be hereinafter collectively referred to as access points.

As described above, when the audio system control program 70 which is an application program is activated, the portable phone 1 functions as the audio system controller 1 to control a reproduction source, a volume, etc. of an audio system through the network 3. In addition, the audio devices 11 to 14 transmit/receive audio signals to/from one another through the network 3.

In order to connect each of the audio devices 11 to 13 to the network 3 by the wireless LAN, a user has to set an SSID, a password etc. of a connection destination. With the configurations and functions of the controller 1 and the audio devices 11 to 14 which will be described below in the audio system, the user can connect the audio devices to the network 3 by simple operations.

Next, the configuration of the portable phone 1 will be described with reference to a block diagram of Fig. 2. The portable phone 1 is a multifunctional phone so-called smart phone. The portable phone 1 has a 3G/4G communication function which is a portable communication network, a wireless LAN (Wi-Fi) communication function, and a Bluetooth (registered trademark) communication function. When the audio system control program 70 which is an application program is activated, the portable phone 1 functions as the controller 1 which can communicate with each of the audio devices 11 to 14 of the audio system through the network 3 to transmit a command message to the audio device 11 to 14 in accordance with a user operation so as to control the audio system.

The portable phone 1 has a control portion 20, an operating portion 30, a medium interface 31, a wireless LAN communication circuit 32, a 3G/4G communication circuit 33, and a Bluetooth (registered trademark) communication circuit 34 on a bus 26. The control portion 20 includes a CPU 21, an ROM (flash memory) 22, an RAM 23, an image processor 24, and an audio processor 25. A video RAM (VRAM) 40 is connected to the image processor 24. A display portion 41 is connected to the VRAM 40. The display portion 41 includes a liquid crystal display. A standby screen, a phone number, etc. is displayed on the display. In addition, when the portable phone 1 functions as the controller 1, a screen for controlling the audio devices 11 to 14 is displayed. An amplifier 42 including a D/A converter is connected to the audio processor 25. A speaker 16 is connected to the amplifier 42.

The image processor 24 is provided with a GPU (Graphics Processing Unit) which generates various graphic images such as the standby screen, the phone number etc. When the audio system control program 70 is activated, the image processor 24 generates an image of the audio system controller in accordance with an instruction of the CPU 21, and develops the generated image on the VRAM 40. The image developed on the VRAM 40 is displayed on the display portion 41.

The audio processor 25 has a DSP (Digital Signal Processor) which encodes/decodes voice of a call. The audio processor 25 outputs the decoded/generated voice to the amplifier 42. The amplifier 42 amplifies the voice signal and outputs the amplified voice signal to the speaker 16.

The wireless LAN communication circuit 32 performs wireless communication with the router 2 in accordance with the standard of IEEE 802.11 g etc. to transmit/receive data or messages to/from the audio devices 11 to 14. The 3G/4G communication circuit 33 makes a voice call and performs data communication through the portable phone communication network. The Bluetooth (registered trademark) communication circuit 34 communicates with another Bluetooth (registered trademark) compliant device to, for example, transmit/receive an audio signal etc. to/from the other Bluetooth (registered trademark) compliant device.

The operating portion 30 includes a touch panel formed on the display portion 41 so that the operating portion 30 can detect a touch operation or a flick operation on the touch panel. A memory card 15 is connected to the medium interface 31. The memory card 15 is, for example, a micro SD card. The audio system control program 70 can be stored in the memory card 15 or the ROM 22. In the embodiment, the audio system control program 70 is stored in the memory card 15, as shown in Fig. 2. Incidentally, the audio system control program 70 may be downloaded by 3G/4G or wireless LAN data communication or may be stored in advance in the ROM 22 or the memory card 15. In addition, a storage area 71 for storing the configuration of the audio system is set in the memory card 15.

A basic program for making a call of the portable phone 1 or executing an application program is stored in the ROM 22. In addition, the ROM 22 is a flash memory. In addition to the basic program, any downloaded application program etc. can be also stored in the ROM 22. A work area which can be used when the CPU 20 executes the audio system control program 70 is set in the RAM 23.

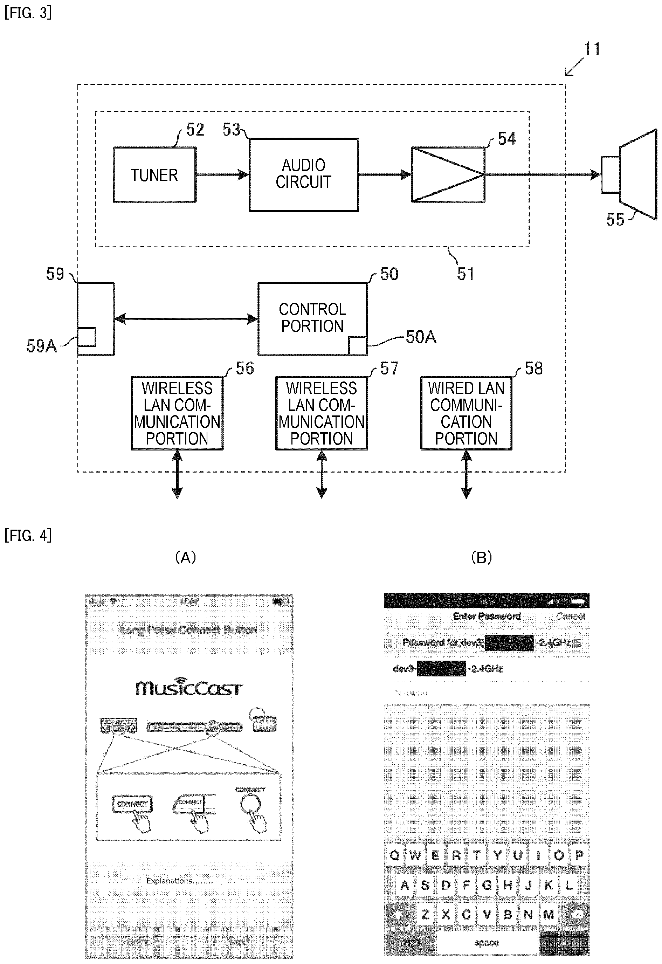

Next, the configuration of the audio device 11 will be described with reference to Fig. 3. The audio device 11 has a control portion 50, an audio processing portion 51, and an operating portion 59. In addition, the audio device 11 has two wireless LAN communication portions (RF modules) 56 and 57 and one wired LAN communication portion 58. The operating portion 59 has a connect button 59A. The control portion 50 includes a CPU and a memory, and stores an audio system program. Based on the audio system program, the control portion 50 controls operations of the audio processing portion 51, the wireless LAN communication portions 56 and 57 and the wired LAN communication portion 58. In addition, when the connect button 59A is pressed, the control portion 50 executes an initial connection operation which is an operation for connecting the audio device 11 to the network 3. The initial connection operation will be described later in detail.

The wireless LAN communication portion 56 performs wireless communication with a wireless access point such as the router 2 based on the wireless LAN standard of IEEE 802.11g etc. In addition, the other wireless LAN communication portion 57 is activated as an access point to relay another audio device (e.g. the audio device 12, 13) to the network 3. In addition, the wireless LAN communication portion 57 is activated as an initial connection access point at the time of initial connection of the audio device 11. The initial connection access point will be described later in detail. Incidentally, the two wireless LAN communication portions 56 and 57 may be materialized by one hardware which is operated in a time division manner. The wired LAN communication portion 58 has a cable connector through which the wired LAN communication portion 58 can communicate with the router 2 based on the communication standard of IEEE 802.3 etc. The controller 1 using the portable phone as its hardware is connected to the network 3. The control portion 50 communicates with the controller 1 through the network 3 to transmit an operating status to the controller 1 or receive a command message from the controller 1.

The audio processing portion 51 has a tuner 52, an audio circuit 52, and a power amplifier 54. The tuner 52 receives an audio signal from FM broadcasting or the Internet, and inputs the received audio signal to the audio circuit 53. The audio circuit 53 performs processing such as equalization, volume adjustment, etc. on the inputted audio signal, and then outputs the processed audio signal to the power amplifier 54. The power amplifier 54 amplifies the inputted audio signal and outputs the amplified audio signal to an externally connected speaker 55. The speaker 55 releases the inputted audio signal as sound.

Incidentally, the basic configuration of each of the audio devices 12 to 14 is the same as that of the audio device 11. However, an internal configuration of an audio processing portion 51 etc. in the audio device 12 to 14 is different from that in the audio device 11.

Next, network connection processing of the audio devices in the audio system will be described with reference to Fig. 4(A) to Fig. 8.

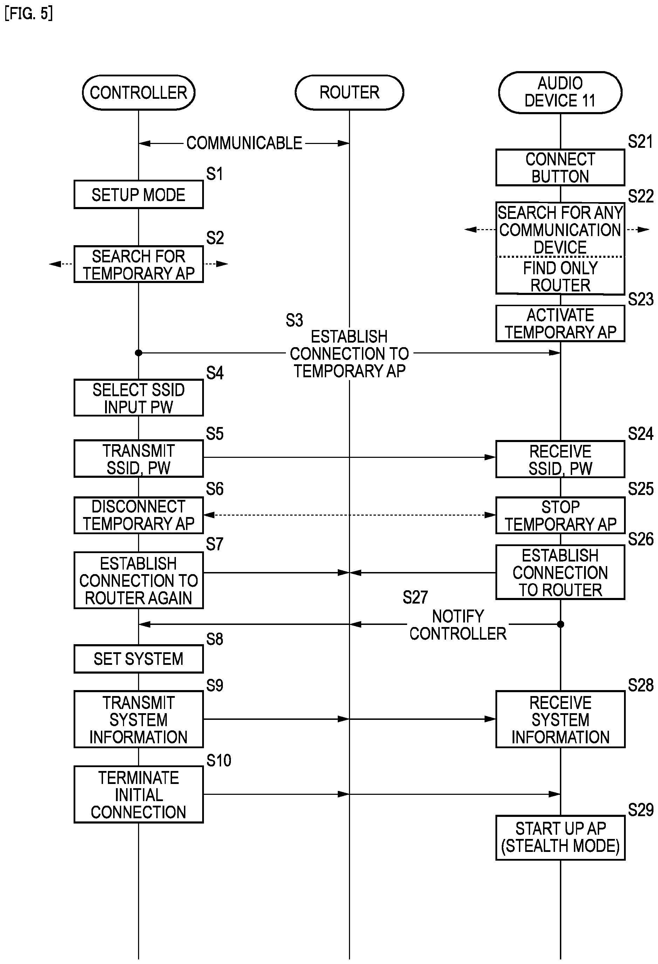

Figs. 4(A) and 4(B) are views illustrating operation guide screens on the controller 1 which is set in a setup mode. Fig. 5 is a view illustrating a procedure for connecting (initially connecting) an initial (first) audio device (which is regarded as the audio device 11 here) to the router 2. When the audio system control program 70 is activated, the portable phone 1 functions as the controller 1. When the controller 1 is set in the setup mode by a user operation (S1), the guide screen shown in Fig. 4(A) is displayed on the display portion 41. In accordance with the guidance of the screen, the user presses the connect button 59A of the audio device 11 (S21). Thus, the controller 1 starts searching for an initial connection access point (temporary access point) (S2). The audio device 11 searches for any connectable wireless access point (S22). The scene in Fig. 5 is a scene in which no audio system has been constructed yet but the audio device 11 is going to be initially registered as a first device. Accordingly, the audio device 11 finds only the router 2 as the connectable access point. The audio device 11 is in an initial state (a state in which the audio device 11 has been just bought or setting of the audio device 11 has been initialized) and does not hold any information about an SSID, a password etc. (hereinafter referred to as router information) for establishing connection to the router 2. For this reason, the audio device 11 cannot be connected to the router 2. Therefore, in order to acquire the router information from the controller 1, the audio device 11 activates an initial connection access point in a stand-alone manner (S23). The initial connection access point is a temporary access point only for the time of initial connection. The controller 1 has stored the SSID and the password of the initial connection access point in advance. That is, the SSID and the password of the initial connection access point have been written as data in the audio system control program 70 in advance. Accordingly, on finding the initial connection access point in the temporary access point searching started in S2, the controller 1 cancels connection to the router 2 once and then establishes connection to the initial connection access point which has been activated by the audio device 11 (S3).

The controller 1 performs a procedure for transmitting the router information of the router 2 as an access point to the audio device 11 as follows. It is highly likely that the controller 1 materialized by the portable phone 1 having the application program installed therein cannot acquire the SSID and the password from the system program of the portable phone 1. Therefore, the controller 1 requests the user to input the SSID and the password of the router 2 here (S4). The SSID may be inputted by the following method. That is, a list of connection destinations (SSIDs) detected at that time is displayed to request the user to select the SSID of the router 2 from the list. The user is requested to input the password (normally written on a body of the router 2). An example of a password input screen on this occasion is shown in Fig. 4(B). The inputted router information is transmitted to the audio device 11 connected as the temporary access point (S5). The audio device 11 receives the router information (S24). Incidentally, the controller 1 may simultaneously receive information for individually identifying the audio device 11 (e.g. an MAC address etc. of the wireless LAN communication portion 56, 57) on this occasion. In addition, in order to immediately enable communication through the network 3, information for establishing the communication may be exchanged here.

After transmitting the router information (SSID, PW) to the audio device 11, the controller 1 cancels the connection to the initial connection access point (the audio device 11) (S6). In parallel therewith, the audio device 11 stops the initial connection access point upon reception of the router information, i.e. the SSID and the password of the router 2, from the controller 1 (S25).

The controller 1 establishes connection again to the router 2 whose connection to the controller 1 has been cancelled in S3 (S7). The audio device 11 establishes connection to the router 2 using the acquired router information (S26). Thus, the controller 1 and the audio device 11 can communicate with each other through the router 2 (the network 3). Here, the audio device 11 first transmits a message indicating that its connection to the router 2 has been completed, to the controller 1 (S27). Then, the controller 1 newly constructs an audio system to which the audio device 11 belongs, and registers the audio device 11 as an initial device of the audio system (S8). The controller 1 transmits the set system information to the audio device 11 (S9). The system information is, for example, an audio system name, the number of audio devices, a connection form, etc. After the processing, the controller 1 terminates the initial connection operation (S10), and transmits a message indicating the termination of the initial connection operation also to the audio device 11.

The audio device 11 receives the system information from the controller 1 (S28). The audio device 11 generates an SSID using identification information and a connection form (a hop number= a tier number from the apex in the tree-like connection form) of the audio device 11 itself to activate the wireless LAN communication portion 57 so as to start up an access point identified by the SSID (S29). The SSID can be identified as an SSID of the audio system by an audio device (e.g. the audio device 12, 13) (having an audio system program 50A) used for the audio system. In addition, a password of the access point can be generated by specific arithmetic operation using the SSID. The specific arithmetic operation can be performed by the audio device (e.g. the audio device 12, 13) (having the audio system program 50A) used for the audio system. Thus, another audio device (e.g. the audio device 12, 13) finding the access point (SSID) can understand the access point as the audio device (e.g. the audio device 11) of the audio system, and can deduce, from the SSID, a position of the audio system to which the audio device 11 is connected. Further, since the audio device 12, 13 can generate the password from the SSID, the audio device 12, 13 itself can establish connection to the access point without requesting the user to input any information.

Incidentally, the access point operates in a stealth mode so as not to accept any access from another device in a normal operation time. Incidentally, at the time of initial connection of the other audio device 12, 13, the access point cancels the stealth mode, transmits a beacon, and accepts access from the audio device 12, 13 to be connected initially, as will be described later.

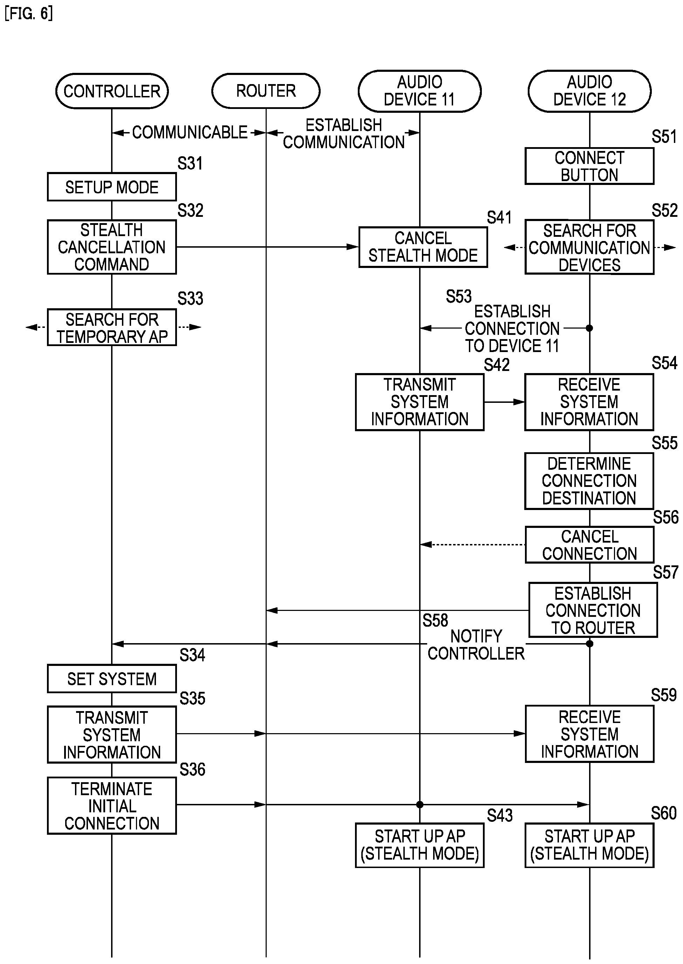

Fig. 6 is a view illustrating a communication procedure for connecting (initially connecting) a second audio device (e.g. the audio device 12) to the router 2 in the case where the audio system has already been constructed (at least one audio device can communicate with the controller 1 through the router 2 and receive control from the controller 1). The communication procedure for additionally registering the audio device 12 into the audio system when the audio system to which the audio device 11 belongs has been constructed will be described below.

When the controller 1 is set in the setup mode by a user operation (S31), the controller 1 first issues, to the already registered audio device (the audio device 11), an instruction to cancel the stealth mode (S32). In response to this, the audio device 11 cancels the stealth mode of the access point, transmits a beacon for informing of its own presence, and allows access from any other device (S41). Next, the controller 1 starts searching for an initial connection access point (temporary access point) (S33). As will be described below, the audio device 12 does not activate the temporary access point. Accordingly, the controller 1 continues the searching state in S33 (continues wireless LAN connection to the router 2) and waits until the controller 1 receives a message from the audio device 12.

In addition, the operation guide screen of Fig. 4(A) is displayed on the display portion 41 of the controller 1 similarly to S1 of Fig. 5, and a connect button 59A of the audio device 12 is pressed by the user (S51). In response to this, the audio device 12 searches for any connectable access points (S52). The audio device 12 finds the connectable access points by the searching in S52. In the case of an example of Fig. 6, the audio device 12 finds the router 2 and the audio device 11 (access point 11) whose stealth mode has been cancelled. As described above, the access point 11 can be identified as a device of the audio system as viewed from the audio device 12, and can be connected using a password generated from the SSID of the access point 11. The audio device 12 once establishes connection to the access point 11 (the audio device 11) (S53). The audio device 12 acquires the system information of the audio system from the audio device 11 (S42, S54). The system information means the system name, each audio device constituting the system, the connection form thereof, and the router information about the SSID, the password etc. of the router 2. Incidentally, each of the audio devices 11 to 14 is programmed to permit the router information to be transmitted to another device of the same audio system. The audio device 12 determines a final connection destination based on the found access points and the system information acquired from the audio device 11 (S55). The connection destination is determined based on the connection forms (hop numbers) of the access points, radio field intensities of the access points etc.

The procedure in the case where the router 2 is determined as the connection destination is shown in Fig. 6. On determining the router 2 as the connection destination (S55), the audio device 12 cancels the connection to the audio device 11 (S56), and establish connection to the router 2 using the acquired router information (S57). The controller 1 has not found the temporary access point in S33 so that the controller 1 is still connected to the router 2 as it is. Thus, the controller 1 and the audio device 12 can communicate with each other through the router 2 (the network 3). Here, the audio device 12 first transmits a message indicating that its connection to the router 2 has been completed, to the controller 1 (S58).

Then, the controller 1 registers and updates the audio device 12 into the audio system (S34), and transmits the system information to the audio device 12 (S35). After the processing, the controller 1 terminates the setup mode (S36). Incidentally, all the audio devices of the audio system are notified the updated system information and a setup mode termination message. In accordance with the termination of the setup mode, the audio device 11, 12 activates the access point in the stealth mode (S43, S60). On this occasion, the audio device 11 returns to the stealth mode again.

Incidentally, when the access point 11 (the audio device 11) is determined as the connection destination in S55, the audio device 12 may jump the processing from S55 to S58. In the notification in S58, the audio device 12 may transmit, to the controller 1, a message indicating that the audio device 12 itself has been connected to the network 3 via the access point 11.

Although the procedure for additionally registering the second audio device 12 into the audio system in which one audio device 11 has already been registered has been described in the description of Fig. 6, the same procedure can be basically applied to the case where two or more audio devices have already been connected. In the case where there are audio devices (access points) which can be initially connected in S53, an audio device high in radio field intensity or small in hop number may be selected. In addition, when an access point (an audio device) other than the router 2 has to be selected in order to determine the connection destination in S55, the access point high in radio field intensity or the access point small in hop number may be selected.

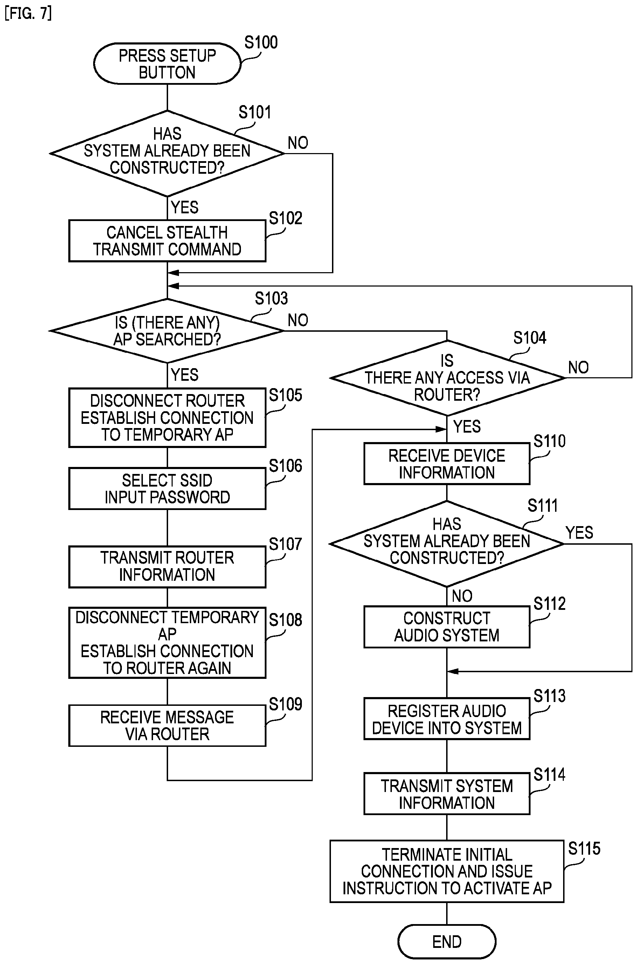

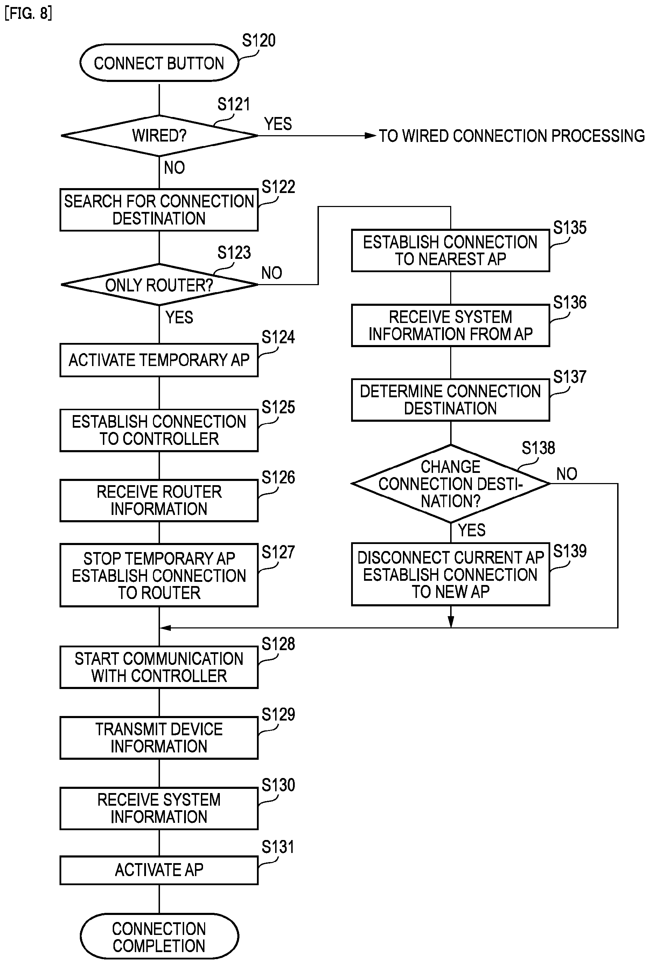

The procedure for establishing mutual communication among the controller 1 and the audio devices 11 and 12 in the times of initial connection of the first device and the second and following devices has been described above. Operations of the control portion of the controller 1 and the control portion of the audio device 11, 12 will be described below with reference to flow charts of Fig. 7 and Fig. 8.

Fig. 7 is a flow chart illustrating processing of the control portion 20 of the controller 1. When a setup button is pressed by the user, the setup mode is activated (S100) and the processing is started. First, the control portion 20 displays the operation guide screen of Fig. 4(A) on the display portion 41, and then determines whether an audio system has already been constructed or not, with reference to an audio system table 231 (S101). When the audio system has already been constructed (YES in S101), the control portion 20 transmits a command message indicating cancellation of the stealth mode to each audio device belonging to the audio system (S102). When no audio system has been constructed yet, the control portion 20 skips the operation of S102.

Next, the control portion 20 searches for presence of an initial connection access point (a temporary access point) (S103), and waits for an access from a new audio device through the network 3 (S104).

When the temporary access point is found (YES in S103), the control portion 20 cancels wireless LAN connection to the router 2 and establishes connection to the temporary access point (S105). The control portion 20 displays a screen for selecting the SSID of the router 2 from SSIDs which can be seen by the wireless LAN communication circuit 32 and a screen for inputting the password of the router 2 on the display portion 41, and requests the user to select the SSID and input the password (S106). The control portion 20 transmits the inputted SSID and password (router information) to the audio device whose temporary access point has been started up (S107). Then, the control portion 20 cancels the connection to the temporary access point and establishes connection to the router 2 again (S108). Then, the control portion 20 receives a message from the audio device via the router (S109), and starts communication with the audio device through the network 3.

The control portion 20 receives device information from the audio device by the communication through the network 3 (S110). The control portion 20 determines whether the audio system has already been constructed or not (S111). When no audio system has been constructed yet (NO in S111), the control portion 20 constructs an audio system based on the device information (S112), and registers the audio device as a first device (S113). When the audio system has already been constructed (YES in S111), the control portion 20 registers the device information received this time into the audio system (S113). The generated or updated system information is transmitted to all the audio devices belonging to the audio system (S114). After the processing, the control portion 20 transmits a message indicating the initial connection processing has been terminated and the access point is activated in the stealth mode (S115). Then, the control portion 20 terminates the setup mode processing. On the other hand, when there is an access from a new audio device through the network 3 in a state in which no temporary access point is found (YES in S104), the control portion 20 goes to the processing of S110.

Fig. 8 is a flow chart illustrating processing of the control portion 50 of each of the audio devices 11 to 14. When the connect button is pressed, the control portion 50 starts the processing (S120). First, the control portion 50 determines whether the audio device 11 to 14 itself is connected to the network 3 by the wired LAN or not (S121). When the audio device 11 to 14 is connected by the wired LAN (YES in S121), the control portion 50 goes to wired connection processing.

When the audio device 11 to 14 is not connected by the wired LAN (NO in S121), the control portion 50 activates the wireless LAN communication portion 56 to search for any wireless LAN connection destination (access point) (S122). When the found connection destination is only the router 2 (YES in S123), the control portion 50 goes to S124. When other audio system access points than the router 2 are found (NO in S213), the control portion 50 goes to S135.

In S124, the control portion 50 activates an initial connection access point (temporary access point) using the wireless LAN communication portion 57 (S124). The control portion 50 establishes connection to the controller 1 which has gained access to the temporary access point (S125), and receives router information from the controller 1 (S126). Then, the control portion 50 stops the temporary access point and establishes connection to the router 2 using the acquired router information (S127). The control portion 50 starts communication with the controller 1 via the router 2 (S128), transmits its own device information to the controller 1 (S129), and receives system information from the controller 1 (S130). Then, the control portion 50 activates an access point in the stealth mode based on an instruction issued from the controller 1 (S131).

When the processing moves to S135 because the access points other than the router 2 have been found, the control portion 50 first establishes connection to a nearest one of the access points (S135). The nearest access point may be an access point highest in radio field intensity. The control portion 50 receives system information (including router information) from the access point (audio device) (S136). The control portion 50 determines a connection destination based on the received system information (S137). When an access point determined as the connection destination is different from the currently connected access point (YES in S138), the control portion 50 disconnects the currently connected access point and establishes connection to the access point determined as the connection destination (S139). Then, the control portion 50 goes to S128. When the access point determined as the connection destination agrees with the currently connected access point, the control portion 50 goes to S128 directly.

In operation of the audio system shown in Fig. 6 and Fig. 8, first, an audio device (the audio device 12) to be newly connected establishes connection to a nearest access point (the audio device 11) to acquires system information therefrom, and determines a connection destination based on the system information. The audio device to be newly connected may not establish connection to the nearest access point once but determine a connection destination from the access points including the router 2 found by the wireless LAN communication portion 56.

When the audio device 11 to 14 is registered as a constituent element of the audio system in the processing of S113 (S8, S34) of the controller 1, an icon (a selection identification image) for selecting the audio device 11 to 14 may be registered simultaneously. Processing for registering the icon (the selection identification image) when the audio device 11 to 14 is registered into the system will be described below.

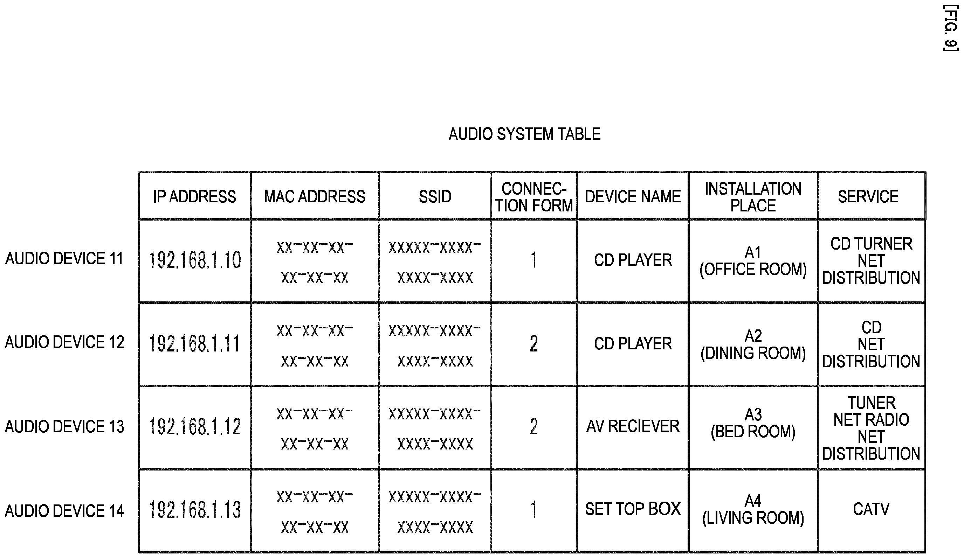

When the icon (the selection identification image) of the audio device 11 to 14 is registered into the controller 1, an audio system table shown in Fig. 9 may be further provided. The table may be stored in the memory card 15 of the controller 1. In Fig. 9, a field corresponding to the audio device 11 to 14 is added and updated in the audio system table when the audio device 11 to 14 is connected to the network.

Device information (device information) of each of the audio devices 11 to 14 is registered into the audio system table. Specifically, an IP address, an MAC address, an SSID, a connection form, a device name, an installation place, service, etc. of the audio device 11 to 14 are registered. The MAC address and the SSID are the MAC address of the wireless LAN communication portion 57, i.e. on an internal access point side and the SSID. The connection form is a numerical value indicating the aforementioned hop number (the tier number from the apex in the tree-like connection form). The device name is text data expressing the name of the audio device.

The installation place (room) is text information for specifying a place where the audio device is installed. Here, a room ID for specifying the room where the audio device is disposed and a name of the room are registered. The service expresses source information of contents which each device for FM broadcasting, a CD (CD player), etc. can reproduce.

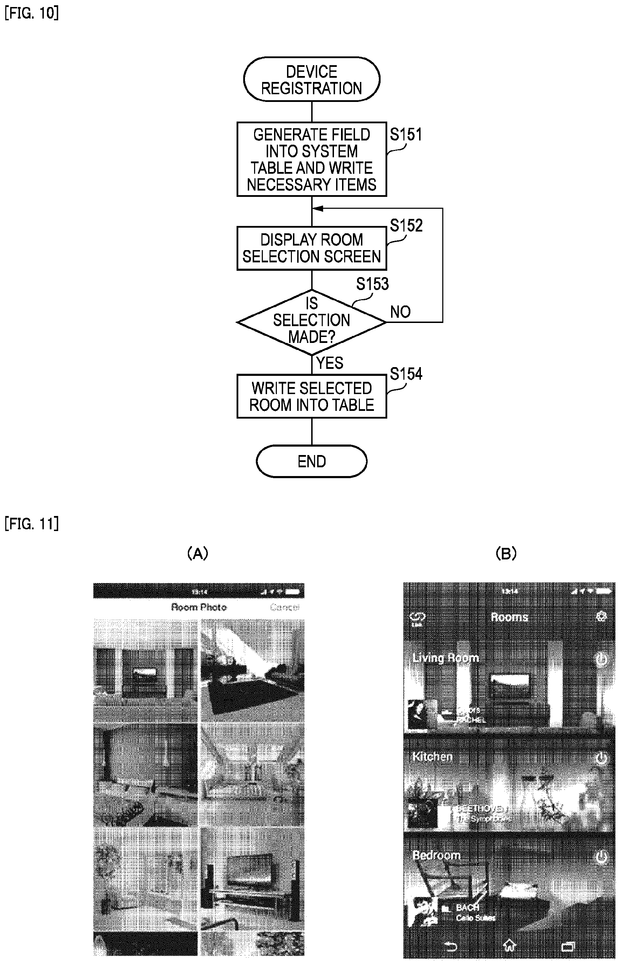

Next, the device registration processing of S113 (S8, S34) will be described in detail with reference to a flow chart of Fig. 10 and guide screens of Figs. 11(A) and 11(B). When device information is received from an audio device, a field for registering the audio device is generated in the audio system table, and necessary items such as an IP address are written (S151). The room selection screen shown in Fig. 11(A) is displayed (S152), and the user is requested to select an icon (a selection identification image) of the audio device (S153). In Fig. 11(A), photos (images) from viewpoints of installation places (rooms) are displayed in a list so that the user can tap and select a photo of an icon (a selection identification image) based on the viewpoints of the places where the audio devices are installed. In addition to the screen shown in Fig. 11(A), a screen for selecting the name of the installation place of the audio device is also displayed so that the user can select the name. The name of the installation place is, for example, Living Room, Kitchen, Bed Room, etc.

When the photo of the icon (selection identification image) and the name of the installation place are selected (YES in S153), text information of the selected installation place (room) and identification information of the identification image are written into the audio system table (S154). Then, the processing is terminated.

After terminating the setup mode, the controller 1 shifts to an audio system control mode. In the audio system control mode, an audio device can be selected by a user operation, and further, an audio source which can be reproduced by the audio device can be selected. The controller 1 displays the room selection screen shown in Fig. 11(B) as a screen for allowing the user to select the audio device. Thus, when an installation place (room) is selected, the audio device is selected.

Incidentally, the audio devices according to the disclosure include an audio/video (AV) device having an image reproduction function. In addition, in the embodiment, the control terminal device is materialized by the portable phone 1 having the audio system control program 70 (application program) installed therein. However, the control terminal device may have another configuration than that. For example, the control terminal device may be a tablet having the audio system control program 70 installed therein, or a special purpose terminal device.

The router information in the embodiment corresponds to the network information in the disclosure. Incidentally, the wireless LAN access point held by the network 3 is only the router 2 (Wi-Fi router) in the embodiment. However, another access point than the router 2 may be provided in the network 3. Accordingly, the network information in the disclosure may include not only the router information but also connection information of the access point (which is not an audio device) on the network 3 side. In addition, the router is generally a network device which can connect two different networks. However, in the disclosure, the router may be a device which does not always have to have a function of connecting the network 3 (local network) to WAN but can be provided with a DHCP server function.

The present application is based on a Japanese patent application (Patent Application No. 2015-121466) filed on June 16, 2015 and a Japanese patent application (Patent Application No. 2015-156004) filed on August 6, 2015.

### Industrial Applicability

According to the disclosure, it is possible to make connection of a communication device to a network easy. Therefore, the disclosure is useful.

### Reference Signs List

- 1: portable phone (controller)
- 2: router (network access point)
- 11, 12, 13, 14: audio device (system access point)

## Claims

1. A connection method for a communication device to establish connection between the communication device and a control terminal device through a network, the control terminal device controlling the communication device, the connection method comprising:
a step of activating the communication device by itself as a stand-alone access point to which the control terminal device can be connected;
a step of cancelling connection of the control terminal device to the network and then establishing connection of the control terminal device to the stand-alone access point;
a step of transmitting network information to the communication device from the control terminal device, the network information being information for establishing connection to the network;
a step of receiving the network information by the communication device;
a step of stopping the stand-alone access point by the communication device;
a step of establishing connection of the communication device to the network using the received network information;
a step of restoring the connection of the control terminal device to the network;
a step of accessing the communication device to the control terminal device through the network; and a step of activating the communication device by itself as an access point though which an other communication device can be connected to the network,
the method further comprising:
a step of starting operating of the communication device as the access point to which the other communication device can be connected;
a step of searching by the other communication device for the access point of the communication device and an access point of the network, to which the other communication device can be connected;
a step of establishing connection of the other communication device to one of the searched access points;
a step of acquiring network information from the connected access point by the other communication device, the network information being information for establishing connection to the network;
a step of establishing connection of the other communication device to the network using the acquired network information; and a step of accessing the other communication device to the control terminal device through the network,
wherein the access point is configured to operate in a mode in which the access point does not transmit information about its own presence; and wherein the access point cancels the mode and transmits the information only when the other communication device is registered.

2. The connection method for a communication device according to claim 1, wherein the communication device is an audio device.

3. The connection method for a communication device according to claim 1, wherein the other communication device activates itself as a further access point after establishing the connection to the network.

## Patentansprüche

1. Verbindungsverfahren für eine Kommunikationsvorrichtung, um eine Verbindung zwischen der Kommunikationsvorrichtung und einer Steuerungsendgerätvorrichtung über ein Netzwerk herzustellen, wobei die Steuerungsendgerätvorrichtung die Kommunikationsvorrichtung steuert, wobei das Verbindungsverfahren umfasst:
einen Schritt des Aktivierens der Kommunikationsvorrichtung an sich als einen eigenständigen Zugriffspunkt, mit dem die Steuerungsendgerätvorrichtung verbunden werden kann;
einen Schritt des Aufhebens einer Verbindung der Steuerungsendgerätvorrichtung mit dem Netzwerk und dann des Herstellens einer Verbindung der Steuerungsendgerätvorrichtung mit dem eigenständigen Zugriffspunkt;
einen Schritt des Übertragens von Netzwerkinformationen an die Kommunikationsvorrichtung von der Steuerungsendgerätvorrichtung, wobei die Netzwerkinformationen Informationen zum Herstellen einer Verbindung mit dem Netzwerk sind;
einen Schritt des Empfangens der Netzwerkinformationen durch die Kommunikationsvorrichtung;
einen Schritt des Anhaltens des eigenständigen Zugriffspunktes durch die Kommunikationsvorrichtung;
einen Schritt des Herstellens einer Verbindung der Kommunikationsvorrichtung mit dem Netzwerk unter Verwendung der empfangenen Netzwerkinformationen;
einen Schritt des Wiederherstellens der Verbindung der Steuerungsendgerätvorrichtung mit dem Netzwerk;
einen Schritt des Zugriffs auf die Kommunikationsvorrichtung zu der Steuerungsendgerätvorrichtung über das Netzwerk; und
einen Schritt des Aktivierens der Kommunikationsvorrichtung an sich als einen Zugriffspunkt, durch den eine andere Kommunikationsvorrichtung mit dem Netzwerk verbunden werden kann,
das Verfahren weiter umfassend:
einen Schritt des Startens eines Betriebs der Kommunikationsvorrichtung als den Zugriffspunkt, mit dem die andere Kommunikationsvorrichtung verbunden werden kann;
einen Schritt des Suchens des Zugriffspunktes der Kommunikationsvorrichtung und eines Zugriffspunktes des Netzwerks, mit dem die andere Kommunikationsvorrichtung verbunden werden kann, durch die andere Kommunikationsvorrichtung;
einen Schritt des Herstellens einer Verbindung der anderen Kommunikationseinrichtung mit einem der gesuchten Zugriffspunkte;
einen Schritt des Erfassens von Netzwerkinformationen von dem verbundenen Zugriffspunkt durch die andere Kommunikationsvorrichtung, wobei die Netzwerkinformationen Informationen zum Herstellen einer Verbindung mit dem Netzwerk sind;
einen Schritt des Herstellens einer Verbindung der anderen Kommunikationsvorrichtung mit dem Netzwerk unter Verwendung der erfassten Netzwerkinformationen; und
einen Schritt des Zugriffs auf die andere Kommunikationsvorrichtung zu der Steuerungsendgerätvorrichtung über das Netzwerk,
wobei der Zugriffspunkt so konfiguriert ist, dass er in einem Modus arbeitet, in dem der Zugriffspunkt keine Informationen über seine eigene Anwesenheit überträgt; und wobei der Zugriffspunkt den Modus aufhebt und die Informationen nur dann überträgt, wenn die andere Kommunikationsvorrichtung registriert ist.

2. Verbindungsverfahren für eine Kommunikationsvorrichtung nach Anspruch 1, wobei die Kommunikationsvorrichtung eine Audiovorrichtung ist.

3. Verbindungsverfahren für eine Kommunikationsvorrichtung nach Anspruch 1, wobei sich die andere Kommunikationsvorrichtung nach Herstellen der Verbindung zum Netzwerk als ein weiterer Zugriffspunkt aktiviert.

## Revendications

1. Méthode de connexion pour un dispositif de communication pour établir une connexion entre le dispositif de communication et un dispositif terminal de commande à travers un réseau, le dispositif terminal de commande commandant le dispositif de communication, le procédé de connexion comprenant :
une étape d'activation du dispositif de communication par lui-même en tant que point d'accès autonome auquel le dispositif terminal de commande peut être connecté ;
une étape de suppression de connexion du dispositif terminal de commande au réseau et ensuite d'établissement de connexion du dispositif terminal de commande au point d'accès autonome ;
une étape de transmission d'informations de réseau au dispositif de communication à partir du dispositif terminal de commande, les informations de réseau étant des informations destinées à établir une connexion au réseau ;
une étape de réception des informations de réseau par le dispositif de communication ;
une étape d'interruption du point d'accès autonome par le dispositif de communication ;
une étape d'établissement d'une connexion du dispositif de communication au réseau en utilisant les informations de réseau reçues ;
une étape de restauration de la connexion du dispositif terminal de commande au réseau ;
une étape d'accès du dispositif de communication au dispositif terminal de commande à travers le réseau ; et
une étape d'activation du dispositif de communication par lui-même en tant que point d'accès à travers lequel un dispositif de communication peut être connecté au réseau,
le procédé comprenant en outre :
une étape de début de mise en fonctionnement du dispositif de communication en tant que point d'accès auquel l'autre dispositif de communication peut être connecté ;
une étape de recherche par l'autre dispositif de communication du point d'accès du dispositif de communication et d'un point d'accès du réseau, auquel l'autre dispositif de communication peut être connecté ;
une étape d'établissement d'une connexion de l'autre dispositif de communication à l'un des points d'accès recherchés ;
une étape d'acquisition d'informations de réseau à partir du point d'accès connecté par l'autre dispositif de communication, les informations de réseau étant des informations destinées à établir une connexion au réseau ;
une étape d'établissement d'une connexion de l'autre dispositif de communication au réseau en utilisant les informations de réseau acquises ; et
une étape d'accès de l'autre dispositif de communication au dispositif terminal de commande à travers le réseau,
dans lequel le point d'accès est configuré pour fonctionner dans un mode dans lequel le point d'accès ne transmet pas d'informations au sujet de sa propre présence ; et dans lequel le point d'accès supprime le mode et transmet les informations uniquement lorsque l'autre dispositif de communication est enregistré.

2. Procédé de connexion pour un dispositif de communication selon la revendication 1, dans lequel le dispositif de communication est un dispositif audio.

3. Procédé de connexion pour un dispositif de communication selon la revendication 1, dans lequel le dispositif de communication s'active lui-même en tant que point d'accès supplémentaire après établissement de la connexion au réseau.
